(19) Europäisches Patentamt
European Patent Office
Office européen des brevets

(11) Publication number: **0 003 565 A1**

# (12) EUROPEAN PATENT APPLICATION

(21) Application number: **79100297.5**

(22) Date of filing: **02.02.79**

(51) Int. Cl.[2]: **C 09 B 23/04,** C 07 D 209/34, D 06 P 3/54

(30) Priority: **02.02.78 IT 1989778**

(43) Date of publication of application: **22.08.79 Bulletin 79/17**

(84) Designated Contracting States: **BE CH DE FR GB NL**

(71) Applicant: **Montedison S.p.A., 31, Foro Buonaparte, Milan (IT)**

(72) Inventor: **Merlo, Fabrizio, Dr., 14, Via Monte Pasubio, Saronno (Varese) (IT)**
Inventor: **Bornengo, Giorgio, 8, Via Paletta, Novara (IT)**

(74) Representative: **Schmied-Kowarzik, Volker, Dr et al, Patentanwälte P. Wirth V. Schmied-Kowarzik, G. Dannenberg P. Weinhold, D. Gudel Siegfriedstrasse 8, D-8000 München 40 (DE)**

## (54) Disperse dyes based on isatin derivatives and process for their preparation, and their use for dyeing and printing synthetic fibres.

(57) Isatin derivative suitable as disperse dyes having the general formula:

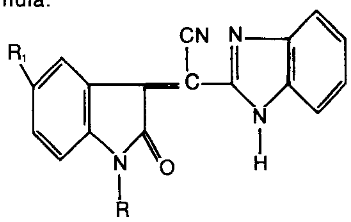

(I)

wherein the symbols have the following meanings:

R represents an alkyl group having up to 5 carbon atoms, a $-CH_2-COOX$ group, wherein X stands for an alkyl group having up to 4 carbon atoms, a $-CH_2-$ 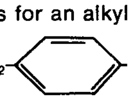 group, or a $-CH_2-CH_2-CN$ group; and $R_1$ represents a H atom, a halogen, preferably Cl or Br, or $NO_2$; and the preparation thereof are described.

The disperse dyes of the invention are particularly suited for the dyeing and printing of synthetic fibres, such as polyester fibres, in shades from yellow-green to orange. The dyes are obtained by condensation of 2-benzimidazolyl-acetonitrile with the corresponding isatinic derivative.

EP 0 003 565 A1

The present invention concerns a class of disperse dyes insoluble in water, having the general formula (I):

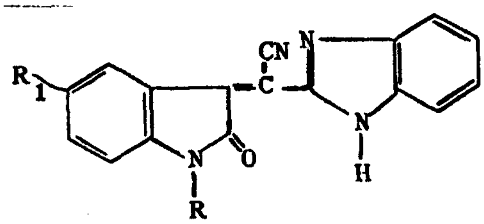

(I)

wherein the symbols have the following meanings:

R represents an alkyl group having up to 5 carbon atoms, a $-CH_2-COOX$ group, wherein X stands for an alkyl group having up to 4 carbon atoms,

a $-CH_2-$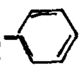 group or a $-CH_2-CH_2-CN$ group; and $R_1$ represents a H atom, a halogen, preferably Cl or Br, or $NO_2$.

The dyes, object of this invention, are particularly suited for the dyeing and printing of synthetic fibres, especially of polyester fibres.

The shades vary from yellow-green to orange. They possess an excellent affinity as well as an excellent fastness to light both in the deep tones as well as in the bright tones.

Good fastness against sublimation, solvents and washing is also found.

The Applicant is not aware of any description of the derivatives of the formula (I) and does not possess any information as to their use in the field of disperse dyes.

Thus, an object of this invention is that of providing a new class of waterinsoluble disperse dyes and the corresponding process for preparation of said dyes that possess excellent tinctorial characteristics within the field of the above indicated applications.

This and other objects, which will appear more clearly to those skilled in the Art from the following description, are achieved according to this invention, by the class of dyes having the formula (I) and by the process for their preparation, characterized in that an isatin derivative of formula (II):

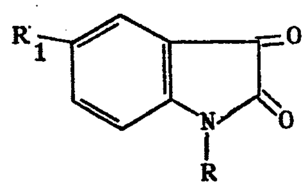

(II)

wherein R and $R_1$ have the meanings previously specified, is condensed at a temperature between 60° and 90°C, according to conventional methods with 2-benzimidazolylacetonitrile.

Object of this invention are the dyes thus obtained according to substantially conventional methods, by condensation of an isatinic derivative of formula (II):

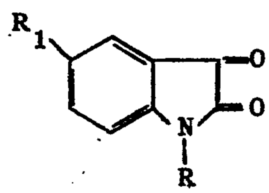

(II)

wherein R and $R_1$ have the meanings specified herein above with 2-benzimidazolylacetonitrile, at temperatures between 60°C and 90°C, in suitable solvents, for instance acetic acid, chlorobenzene, dichlorobenzene, dimethylformamide or ethyl alcohol.

The isatinic derivatives usable for the purpose more particularly are e.g.: N-ethylisatin, N-butylisatin, N-cyanoethylisatin, N-benzylisatin and 5-nitro-N-butylisatin.

The N-substituted isatins of formula (II) needed as intermediate starting compounds, are known products available on the market, or can easily be prepared according to known methods.

For instance, they can be obtained by condensation of the

non-substituted isatin , which is a known compound, with a compound of the formula Al-R, wherein Al is an halogen while R has the above indicated meaning, in aprotic solvents (dimethylformamide).

The dyes of the general formula (I) are conveniently used as disperse dyes. In order to be able to use them, they must previously be transformed into suitable tinctorial preparations.

In general, such operations can be carried out by methods, such as, for instance, by grinding, in the presence of dispersing agents.

Such dispersions, when suitably dried under reduced pressure, may be used after being diluted with water etc.. Known techniques can be used.

This invention is described further by the following examples which are given for illustrative purposes. Example 8 illustrates an application of the dyes of the invention on polyester fabrics. The given parts and percentages are understood to be by weight, unless differently indicated.

<u>Example 1:</u>

To 30 parts of dimethylformamide there is added 10,15 parts of N-butylisatin and 8,16 parts of 2-benzimidazolylacetonitrile. This mixture is then heated at 80°-85°C for 5 hours, with stirring.

The mixture is then allowed to cool down to room temperature, whereupon it is filtered and then dried at 50°C to a constant weight. There is obtained 14,5 parts of yellow dye having the following structure:

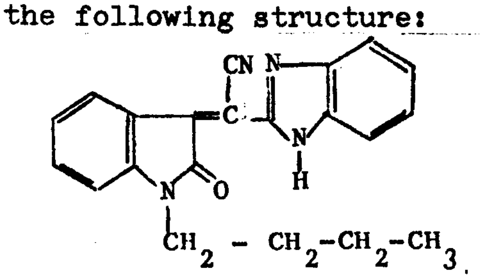

and which, suitably dispersed, dyes polyester fibres in a yellow hue, with good fastness to washing, to perspiration, to solvents, to rubbing and particularly to light and sublimation.

N-Butylisatin is easily obtained by condensation of 7.35 parts of isatin with 8.9 parts of butyl bromide at 20°C, in the presence of 3.4 parts of potassium hydroxide and 30 parts of dimethylformamide.

The reaction mixture is discharged into water and the product is then filtered, washed with water and dried. There is obtained 10,15 parts of the isatinic intermediate product used for obtaining the above described dye.

The dyes were prepared operating in the same way as in example 1 as described above and the dyeings obtained with them showing the characteristics shown in the following table:

| Example 2 | Dye | Shade on a polyester fibre |
|---|---|---|
| | 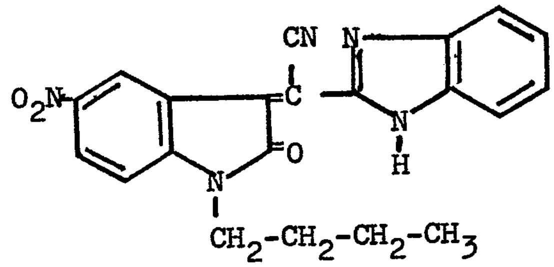 | yellow |

| Example 3 | | |
|---|---|---|
| | 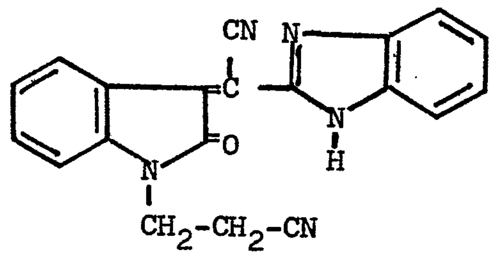 | yellow |

| Example 4 | Dye | Shade on a polyester fibre |
|---|---|---|
| | 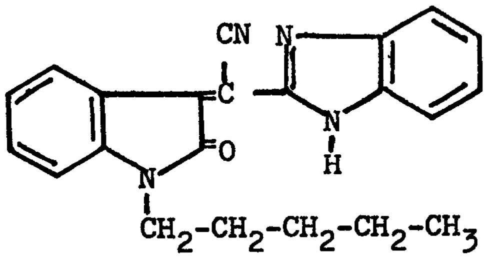 | yellow |
| **Example 5** | | |
| | 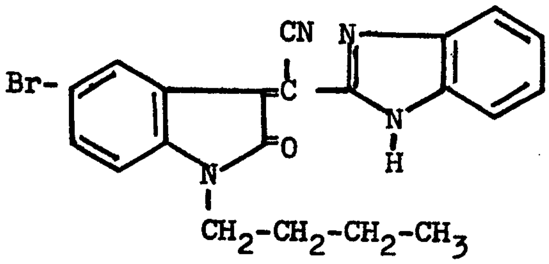 | yellow |
| **Example 6** | | |
| | 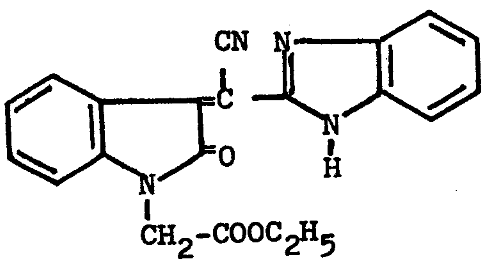 | yellow |
| **Example 7** | | |
| | 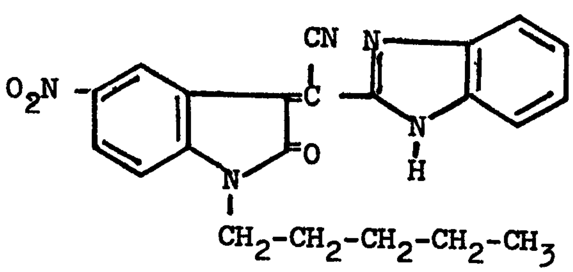 | yellow |

Example 8 (application)

In a ball mill, 1 part of the dye obtained in Example 1, 1 part of sodium dinaphthylmethandisulphonate dispersant, 1.5 parts of ethylene glycol and 6.5 parts of water were ground for 48 hours, until a fine dispersion was obtained.

The dispersion thus obtained was added, in a dye bath, to about 3000 parts of water at 40° - 50°C. Thereupon there was introduced into this bath 100 parts of a polyester fabric previously scoured, after which the bath was slowly brought up to 130°C, and at this temperature the fabric was dyed for 90 minutes.

The bath was then allowed to cool down to 60°C and the fabric was copiously rinsed with water, then soaped, once again rinsed with water and finally dried.

There was obtained a uniform dyeing of yellow shade, particularly fast to light and to sublimation.

R and X can have the meaning of an alkyl group. Examples of such alkyl groups are: methyl, ethyl, n-propyl, i-propyl, n-butyl and i-butyl groups.

Patent Claims

1) Dispersed dyes derived from isatin, having formula (I):

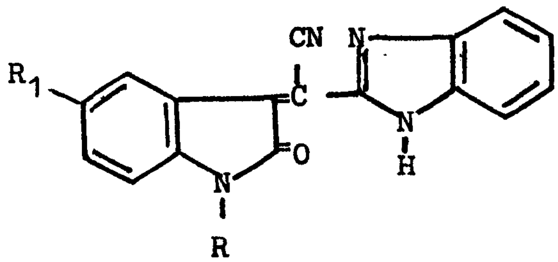 (I)

wherein the symbols have the following meanings:
R represents an alkyl group having up to 5 carbon atoms, a $-CH_2COOX$ group wherein X stands for an alkyl group having up to 4 carbon atoms, a $-CH_2-$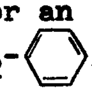group, or a $-CH_2-CH_2-CN$ group; and
$R_1$ represents an atom of hydrogen, or a halogen, preferably Cl or Br, or $NO_2$.

2) Process for the preparation of dispersed dyes of formula (I) of claim 1, characterized in that an isatinic derivative of formula:

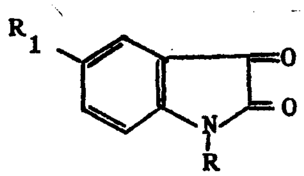

is condensed in a solvent, at a temperature between 60° and 90°C, with 2-benzimidazolylacetonitrile.

3) The use of the disperse dyes as claimed in claims 1 and 2 for dyeing and printing of polyester fibres.

4) Materials dyed and printed with the dyes of claim 1.

European Patent Office

# EUROPEAN SEARCH REPORT

Application number
EP 79 10 0297

## DOCUMENTS CONSIDERED TO BE RELEVANT

| Category | Citation of document with indication, where appropriate, of relevant passages | Relevant to claim |
| --- | --- | --- |
| A | FR - A - 970 204 (KODAK-PATHE)<br>* Figures 1,2 *<br>-- | 1 |
| A | GB - A - 809 691 (ICI)<br>* Page 1, lines 9-25 *<br>-- | 1 |
| A | GB - A - 620 802 (DOYLE AND KENDALL)<br>* Page 4, lines 23-78 *<br>---- | 1 |

CLASSIFICATION OF THE APPLICATION (Int. Cl.[2])

C 09 B 23/04
C 07 D 209/34
D 06 P 3/54

TECHNICAL FIELDS SEARCHED (Int.Cl.[2])

C 09 B 23/04
C 09 B 23/02
C 07 D 209/34

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
| --- | --- | --- |
| The Hague | 14-05-1979 | GINESTET |